# FASCICULE DE BREVET EUROPEEN

(11) **EP 2 996 988 B1**
(45) Date de publication et mention de la délivrance du brevet: **20.01.2021**
(21) Numéro de dépôt: 14725139.1
(22) Date de dépôt: 16.05.2014
(51) Int. Cl.: C02F 1/28, C02F 1/52, C02F 1/56, C02F 1/00

(54) **PROCEDE DE TRAITEMENT DE FLUIDE AQUEUX PAR CONTACT AVEC UN LIT FLUIDISE DE CHARBON ACTIF**
VERFAHREN ZUR BEHANDLUNG EINER WÄSSRIGEN FLÜSSIGKEIT DURCH KONTAKT MIT AKTIVKOHLE-WIRBELBETT
METHOD FOR TREATING AN AQUEOUS FLUID BY CONTACT WITH A FLUIDISED BED OF ACTIVATED CARBON

(30) Priorité: 16.05.2013 FR 1354387
(43) Date de publication de la demande: 23.03.2016
(73) Titulaire: SAUR, 78280 Guyancourt (FR)
(72) Inventeur: PEROT, Jean, F-78990 Elancourt (FR)
(74) Mandataire: Regimbeau
(86) Numéro de dépôt international: PCT/EP2014/060147
(87) Numéro de publication internationale: WO 2014/184371

(56) Documents cités:
- FR-A1- 2 628 337
- FR-A1- 2 946 333

## Description

### DOMAINE DE L'INVENTION

La présente invention concerne le domaine du traitement des fluides aqueux. Plus particulièrement, la présente invention concerne un procédé et une installation de traitement de fluides aqueux, en particulier des eaux à potabiliser et des eaux usées, visant à éliminer les micropolluants organiques et les matières organiques naturelles des fluides aqueux.

### ETAT DE LA TECHNIQUE

Le charbon actif, sous forme granulaire (CAG) ou sous forme de poudre (CAP), est communément employé pour traiter les eaux à potabiliser ou les eaux résiduaires urbaines ou tertiaires. Le charbon actif permet l'élimination de nombreux micropolluants organiques et de nombreuses matières organiques naturelles par adsorption.

Divers procédés de traitement d'eaux brutes au moyen de charbon actif en poudre ont été mis en oeuvre. Par exemple, il a été proposé d'injecter du charbon actif en poudre dans l'eau à traiter en amont d'un système de filtration. Il a également été proposé d'employer du charbon actif en poudre sous forme de lit dans des réacteurs spécifiques, avec ou sans ajout d'agents de coagulation et de floculation, dans lesquels les opérations de contact avec le charbon actif et de séparation des eaux traitées du charbon actif sont réalisées dans des ouvrages séparés. Il a également été proposé de traiter des eaux brutes, préalablement mises en contact avec des agents de coagulation et de floculation, au sein de lits fluidisés de charbon actif en poudre. De tels traitements sont réalisés au sein de réacteurs fonctionnant en flux ascendant, tels que décrits dans la demande internationale WO2010/142746. Ces réacteurs sont équipés de moyens d'injection de charbon actif en poudre frais, d'agents de coagulation et de floculation agencés en coordination avec le circuit d'alimentation en eaux brutes de manière à définir dans le réacteur trois zones distinctes de fonctionnement. Une première zone, aménagée à la base du réacteur, assure l'admission et la répartition homogène des eaux brutes dans lesquelles les agents de coagulation et de floculation ont été préalablement injectés. Cette première zone, dite zone aménagée, comprend généralement un garnissage constitué d'un lit de gravier surmonté par un lit de sable. Une seconde zone, constituée par un lit fluidisé de charbon actif en poudre, surmonte la première zone. La seconde zone assure la dépollution des eaux brutes par adsorption. Enfin une troisième zone, aménagée dans la partie haute du réacteur, assure la séparation et la récupération des eaux dépolluées. De tels réacteurs permettent de dépolluer de manière efficace les fluides aqueux et permettent de réduire significativement l'empreinte au sol des installations de traitement puisque les étapes de coagulation, floculation, adsorption sur charbon actif en poudre et séparation sont réalisées dans un seul réacteur.

Néanmoins, dans un souci de réduire les coûts associés au traitement des eaux, un besoin existe pour la mise au point d'un procédé permettant de traiter efficacement les fluides aqueux tout en réduisant les consommations en agents de floculation et coagulation. Un besoin existe également pour la mise au point d'un dispositif de traitement et d'une installation de traitement permettant de traiter efficacement les fluides aqueux tout en réduisant les consommations en agents de floculation et coagulation et en maintenant une empreinte au sol réduite.

### RESUME DE L'INVENTION

La présente invention concerne un procédé de traitement en flux ascendant d'un fluide aqueux par adsorption sur charbon actif en poudre au sein d'un lit fluidisé de charbon actif selon la revendication 1.

La présente invention concerne également une installation de traitement (1') d'un fluide aqueux par adsorption sur charbon actif en poudre selon la revendication 11.

### BREVE DESCRIPTION DES FIGURES

La figure 1 représente un exemple de réacteur de traitement à lit fluidisé de charbon actif en poudre fonctionnant en flux ascendant selon la présente invention.
La figure 2 représente un exemple d'installation de traitement d'un fluide aqueux par adsorption sur charbon actif en poudre de la présente invention.
La figure 3 représente les résultats d'exploitation d'un réacteur selon la présente invention.

### DEFINITIONS

L'expression « charbon actif frais » désigne par opposition à l'expression « charbon actif usagé » du charbon actif n'ayant pas encore été mis en contact avec des micropolluants organiques ou des matières organiques naturelles.

L'expression « charbon actif en poudre » désigne des particules de charbon actif présentant un diamètre moyen inférieur à 100 µm.

L'expression « fluide aqueux à traiter » désigne un fluide aqueux que l'on souhaite débarrasser des micropolluants organiques et/ou des matières organiques naturelles. L'expression « fluide aqueux dépollué » désigne l'état d'un fluide aqueux après mise en contact avec un lit fluidisé de charbon actif en poudre.

L'expression « fluide aqueux dépollué et décanté » désigne l'état d'un fluide aqueux après traitement selon la présente invention.

### EXPOSE DE L'INVENTION

De manière surprenante, les inventeurs ont découvert que les consommations en agents de coagulation et de floculation pouvaient être significativement réduites, dans les procédés et installations de traitement des fluides aqueux par adsorption sur charbon actif en poudre, par mise en contact préalable du fluide à traiter avec des agents de coagulation, de floculation et du charbon actif frais. Les inventeurs ont ainsi mis en évidence que l'injection d'agents de coagulation, de floculation et de charbon actif frais en poudre dans le fluide à traiter, avant traitement, permet de réduire, d'un facteur pouvant atteindre 10, les consommations en masse en agents de coagulation et en agents de floculation tout en maintenant les performances dépolluantes du procédé.

Ainsi, la présente invention concerne un procédé de traitement en flux ascendant de fluides aqueux par adsorption sur charbon actif en poudre au sein d'un lit fluidisé de charbon actif en poudre comprenant les étapes de :
a) mise en contact du fluide aqueux à traiter avec un agent de coagulation, un agent de floculation et du charbon actif frais en poudre ;
b) injection du fluide aqueux obtenu à l'issue de l'étape a) en partie inférieure d'un lit fluidisé de charbon actif en poudre dont la concentration moyenne en charbon actif varie de 2 à 10g/l, de manière à mettre en contact le fluide aqueux obtenu à l'étape (a) avec les particules de charbon actif en poudre ;
c) séparation gravitaire du fluide aqueux dépollué des particules de charbon actif en poudre en partie supérieure du lit fluidisé pour obtenir un fluide aqueux dépollué et décanté;
d) collecte du fluide aqueux dépollué et décanté ;
e) extraction de charbon actif usagé.

L'injection du fluide aqueux obtenu à l'étape a) dans la partie inférieure d'un lit fluidisé de charbon actif en poudre permet d'assurer l'expansion du charbon actif en poudre au sein du lit tout en permettant la séparation gravitaire du fluide aqueux dépollué et du charbon actif en poudre dans la partie supérieure du lit. Le lit fluidisé de charbon actif en poudre comprend ainsi un gradient décroissant de charbon actif en poudre, la partie inférieure du lit comprenant une concentration en charbon actif supérieure à celle de la partie supérieure du lit. L'extraction de charbon actif usagé peut être réalisée en continu ou de manière ponctuelle.

Typiquement, les étapes b), c) et d) du procédé de la présente invention sont réalisés au sein d'un ouvrage unique, tel qu'un réacteur de traitement à lit fluidisé de charbon actif en poudre fonctionnant en flux ascendant.

Le procédé de la présente invention permet de dépolluer efficacement les fluides. Des performances équivalentes, voire supérieures à celle des procédés de l'art antérieur, sont obtenues.

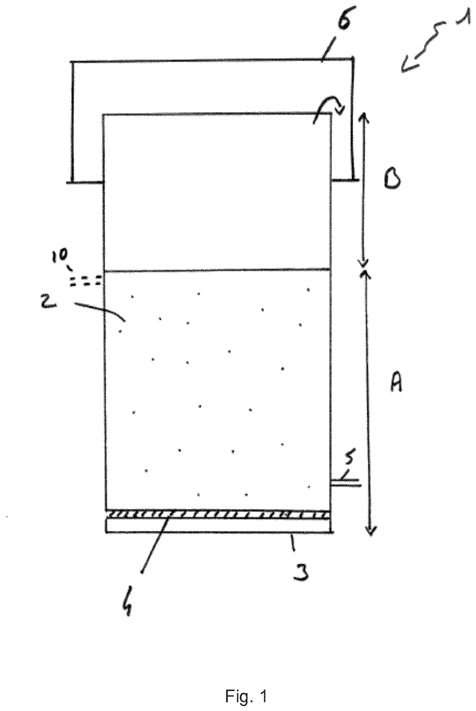

La présente invention concerne également un réacteur de traitement à lit fluidisé de charbon actif en poudre fonctionnant en flux ascendant adapté à la mise en oeuvre du procédé de la présente invention. Un tel réacteur est représenté à la figure 1.

Le réacteur de traitement (1) comprend :
- une zone réactionnelle (A) constituée d'un lit fluidisé de charbon actif en poudre (2) s'étendant depuis la base (3) du réacteur, ladite zone réactionnelle comprenant :
   - une rampe de distribution (4) située à la base du réacteur permettant d'injecter dans le réacteur un fluide aqueux comprenant le fluide aqueux à traiter, du charbon actif frais en poudre, un agent de coagulation et un agent de floculation ;
   - un circuit d'extraction (5) du charbon actif en poudre usagé ;
- une zone de séparation (B) surmontant la zone réactionnelle (A) permettant la séparation gravitaire du fluide aqueux dépollué du charbon actif en poudre.

A la différence des réacteurs de traitement à lit fluidisé de charbon actif en poudre fonctionnant en flux ascendant décrits dans la demande internationale WO 2010/142746, le réacteur de la présente invention est dépourvu d'une zone aménagée à la base du réacteur. Dans le réacteur de la présente invention, l'injection du charbon actif en poudre, du fluide aqueux à traiter, des agents de coagulation et de floculation par une même rampe de distribution permet de définir deux zones dans le réacteur : une zone réactionnelle (A) et une zone de séparation (B).

Comme détaillé plus amplement par la suite, la rampe de distribution assure plusieurs fonctions au sein du réacteur. Son agencement au sein du réacteur permet :
- une distribution homogène du fluide aqueux à traiter au sein du réacteur ;
- une distribution homogène des agents de coagulation et floculation ;
- une distribution homogène du charbon actif frais en poudre ;
- une prévention des phénomènes de tassement ;
- le maintien de l'état fluidisé du lit de charbon actif en poudre ;
- d'obtenir des vitesses ascensionnelles variant de 2 à 12 m³/m²/h.

Avantageusement, aucune zone morte (zone où l'eau ne circule plus) ne se forme dans le réacteur de la présente invention.

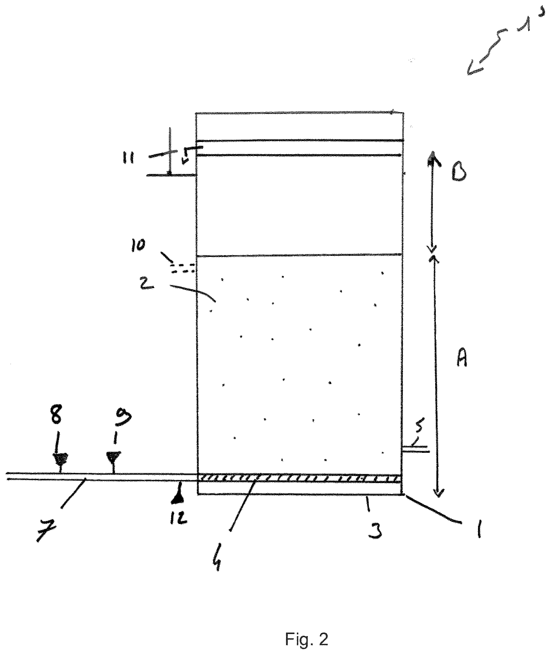

La présente invention concerne également une installation de traitement d'un fluide aqueux par adsorption sur charbon actif en poudre. Le procédé de la présente invention peut être tout particulièrement mis en oeuvre dans une telle installation. Une telle installation est représentée à la figure 2.

L'installation de traitement (1') de la présente invention comprend :
- une canalisation de transport (7) du fluide aqueux à traiter ;
- un dispositif d'injection (8) d'un mélange comprenant un agent de coagulation et du charbon actif frais en poudre dans la canalisation de transport du fluide aqueux à traiter;
- un dispositif d'injection (9) d'un agent de floculation dans le fluide aqueux à traiter ;
- un réacteur de traitement à lit fluidisé de charbon actif en poudre fonctionnant en flux ascendant (1), le réacteur comprenant :
   - une zone réactionnelle (A) constituée d'un lit fluidisé de charbon actif en poudre (2) s'étendant depuis la base (3) du réacteur, ladite zone réactionnelle comprenant :
      - une rampe de distribution (4) du fluide aqueux à traiter située à la base (3) du réacteur et connectée à la canalisation (7) de transport du fluide aqueux à traiter;
      - un circuit d'extraction (5) du charbon actif usagé ;
   - une zone de séparation (B) surmontant la zone réactionnelle (A) permettant la séparation gravitaire du fluide aqueux dépollué du charbon actif en poudre.

Le réacteur et l'installation de traitement de la présente invention permettent de traiter efficacement les fluides aqueux tout en réduisant les consommations en agents de floculation et de coagulation et en maintenant une empreinte au sol réduite.

Par ailleurs, le réacteur et l'installation de traitement de la présente invention présentent l'avantage d'être faciles d'entretien. Leur nettoyage ne nécessite pas de longs temps d'immobilisation.

Des aspects détaillés du procédé, du réacteur et de l'installation de traitement de la présente invention sont décrits ci-dessous.

L'installation de traitement (1') de la présente invention comprend un dispositif d'injection (8), présent en amont du réacteur de traitement, permettant d'injecter un mélange comprenant un agent de coagulation et du charbon actif frais en poudre dans la canalisation transportant le fluide aqueux à traiter vers le réacteur. Le mélange comprenant l'agent de coagulation et le charbon actif frais en poudre peut être sous la forme d'une suspension aqueuse.

L'installation de traitement comprend également un dispositif d'injection (9) permettant l'injection d'un agent de floculation dans le fluide aqueux à traiter. Le dispositif d'injection (9) peut permettre d'injecter l'agent de floculation dans la canalisation de transport du fluide aqueux à traiter ou permettre d'injecter l'agent de floculation dans le mélange comprenant l'agent de coagulation et le charbon actif frais en poudre. Lorsque le dispositif d'injection (9) permet d'injecter l'agent de floculation directement dans la canalisation de transport du fluide aqueux à traiter, le dispositif peut être placé en amont ou en aval du dispositif d'injection du mélange comprenant l'agent de coagulation et le charbon actif frais en poudre. Le dispositif d'injection (9) est de préférence placé en aval du dispositif d'injection (8) du mélange comprenant l'agent de coagulation et le charbon actif frais en poudre (figure 2).

Ainsi, dans le procédé de la présente invention, la mise en contact du fluide aqueux à traiter avec un agent de coagulation, un agent de floculation et du charbon actif frais en poudre (étape a)) peut être réalisée par injection d'un mélange comprenant l'agent de coagulation et le charbon actif frais en poudre dans le fluide aqueux à traiter, cette injection étant suivie ou précédée d'une injection de l'agent de floculation dans le fluide aqueux à traiter. De manière alternative, l'étape a) peut être réalisée par injection de l'agent de floculation dans un mélange comprenant l'agent de coagulation et le charbon actif frais en poudre, suivie d'une injection du mélange obtenu dans le fluide aqueux à traiter.

Les deux dispositifs d'injection étant présents en amont du réacteur, le fluide aqueux pénétrant dans le réacteur de traitement (1) par la rampe de distribution (4) comprend le fluide aqueux à traiter, du charbon actif frais en poudre, un agent de coagulation et un agent de floculation.

L'agent de coagulation peut être choisi parmi les agents de coagulation à base de fer, d'aluminium ou leurs mélanges, tels que le chlorure ferrique, le sulfate ferrique ou le sulfate d'aluminium. Des exemples d'agents de coagulation commerciaux incluent les produits WAC, WAC HB et Aqualenc.

La quantité d'agent de coagulation employée dans les procédés, réacteurs et installations de la présente invention est ajustée en fonction de la quantité de charbon actif frais en poudre injecté dans le fluide aqueux à traiter.

Avantageusement, la quantité d'agent de coagulation à base de fer employée est telle que la masse de fer représente de 0.5% à 1.5 % de la masse de charbon actif frais en poudre injectée dans le fluide aqueux à traiter. Ainsi, de 5 à 15 mg de fer par gramme de charbon actif frais en poudre sont injectés dans le fluide aqueux à traiter. Pour référence, dans les réacteurs décrits dans la demande internationale WO2010/142746, de 54 à 140 mg de fer par gramme de charbon actif frais en poudre sont injectés dans le fluide aqueux à traiter.

Avantageusement, la quantité d'agent de coagulation à base d'aluminium employée dans les procédés, réacteurs et installations de la présente invention est telle que la masse d'aluminium représente de 0.15% à 0.45% de la masse de charbon actif frais en poudre injecté dans le fluide aqueux à traiter. Ainsi, de 1,5 à 4,5 mg d'aluminium par gramme de charbon actif frais en poudre sont injectés dans le fluide aqueux à traiter. Pour référence, dans les réacteurs décrits dans la demande internationale WO2010/142746, de 17 à 44 mg d'aluminium par gramme de charbon actif frais en poudre sont injectés dans le fluide aqueux à traiter.

L'agent de floculation peut être choisi parmi les agents de floculation acryliques, comme les polyacrylamides anioniques et non ioniques.

La quantité d'agent de floculation employée est choisie de manière à maintenir une hauteur de lit fluidisé de charbon actif stable dans le temps et de manière à assurer une bonne séparation des particules de charbon actif en poudre du fluide aqueux dépollué. Avantageusement, la concentration en agent de floculation peut varier de 0,04 à 0,08 g/m³. Pour référence, dans les réacteurs décrits dans la demande internationale WO2010/142746, de 0.1 à 0.5 g/m³ d'agent de floculation sont injectés dans le fluide aqueux à traiter.

Dans l'installation de traitement de la présente invention, la canalisation de transport (7) est reliée au réacteur de traitement (1). Tout particulièrement, la canalisation de transport est connectée à une rampe de distribution (4) par laquelle le fluide aqueux comprenant le fluide aqueux à traiter, le charbon actif frais en poudre et les agents de coagulation et de floculation pénètre dans le réacteur de traitement.

La rampe de distribution est située à la base (3) du réacteur dans la zone dite « zone réactionnelle » (A). La rampe de distribution est typiquement choisie et agencée de manière à distribuer le fluide aqueux de manière homogène à la base du réacteur. Une bonne répartition du fluide aqueux peut tout particulièrement être obtenue lorsque la rampe de distribution est un distributeur sur lequel sont disposés des jeux de ramifications équidistantes et percées d'orifices à intervalles identiques, de préférence dirigés vers le fond en quinconce alterné.

La zone réactionnelle (A) dans laquelle est située la rampe de distribution (4) s'étend à partir de la base du réacteur (3). Elle est constituée par un lit de charbon actif en poudre fluidisé (2) dont la concentration en charbon actif varie de 2 à 10 g/l, plus particulièrement de 3 à 7 g/l. La concentration moyenne en charbon actif au sein du lit fluidisé de charbon actif en poudre varie principalement en fonction des teneurs en constituants particulaires du fluide aqueux à traiter, des dosages en adsorbant et de la vitesse ascensionnelle dans le réacteur. Typiquement, la hauteur de zone réactionnelle varie de 1.5 à 4 m, plus particulièrement de 2 à 3 m. Le terme «vitesse ascensionnelle » désigne le rapport du débit du fluide aqueux injecté dans le réacteur sur la surface au sol du réacteur. La vitesse ascensionnelle varie généralement de 2 à 12 m³/m²/h, plus particulièrement de 6 à 10 m³/m²/h. La vitesse ascensionnelle peut être choisie en fonction de la nature des fluides aqueux à traiter et des besoins épuratoires afin de permettre des temps de contact suffisants dans la zone réactionnelle pour dépolluer les fluides aqueux. Ainsi, pour des traitements d'affinage d'eau superficielle ayant subi au préalable un traitement de clarification, les temps de contact peuvent varier de 10 à 30 minutes pour éliminer des micropolluants organiques, tels que des pesticides, ou des matières organiques naturelles réfractaires aux prétraitements initiaux. Dans d'autres applications, les temps de contact pourront aller au-delà des 30 à 60 minutes afin de répondre à de fortes charges organiques à éliminer et/ou à s'adapter à des niveaux de pollution élevés en micropolluants organiques.

L'injection du fluide aqueux dans la zone réactionnelle au sein même du lit fluidisé de charbon actif en poudre contribue au maintien de l'expansion du charbon actif en poudre. Le flux entrant assure un brassage hydraulique dans le réacteur. Il n'est ainsi pas nécessaire de disposer d'un système d'agitation mécanique pour homogénéiser le lit de charbon actif fluidisé. Cependant, si désiré, un tel système peut être employé.

Il est également à noter que la turbulence créée au sein du lit de charbon actif par le contact direct du charbon actif avec le fluide aqueux au voisinage de la rampe de distribution réduit les phénomènes de tassement. Le réacteur peut ainsi être isolé sans recirculation d'eau ou à de très faibles débits sans générer de problème de remise en suspension du lit à la remise en production. Cependant, de manière optionnelle, le réacteur peut comprendre un circuit de recirculation des fluides traités débouchant en amont de la rampe de distribution pour assurer une fonction de maintien du lit fluidisé pendant les phases d'arrêt du réacteur.

Le charbon actif en poudre est constitué de particules dont le diamètre moyen est inférieur à 100 µm. Le diamètre moyen des particules varie typiquement de 1 à 99 µm, tel que de 3 à 80 µm ou de 5 à 45 µm, ou 15 à 45 µm. La taille des particules peut être déterminée par granulométrie laser. L'emploi de charbon actif en poudre permet des gains épuratoires par rapport à d'autres technologies utilisant du charbon actif en grain (particules ayant un diamètre moyen ≥ 100 µm). La diminution des tailles de particule d'adsorbant en poudre permet d'augmenter les capacités d'adsorption et ainsi de réduire les consommations en charbon actif. Le charbon actif en poudre présente généralement une densité apparente variant de 0,30 et 0,60 kg/l.

Dans le réacteur de traitement, le lit fluidisé de charbon actif est de préférence renouvelé en continu. Le renouvellement en continu du lit permet d'éviter la saturation progressive en micropolluants. Le renouvellement est assuré par ajout de charbon actif frais en poudre et extraction de charbon actif fluidisé usagé en quantité équivalente. Ainsi le procédé de la présente invention peut comprendre une étape d'extraction de charbon actif usagé en une quantité égale à la quantité de charbon actif frais en poudre injectée en partie inférieure du lit fluidisé de charbon actif en poudre. Cependant, dans des modes de réalisation alternatifs, l'extraction de charbon actif usagé peut être réalisée de manière ponctuelle.

Comme préalablement indiqué, l'introduction de charbon actif frais dans le réacteur est réalisée par la rampe de distribution (4) située à la base (3) du réacteur dans la zone réactionnelle (A). La rampe de distribution étant typiquement choisie et agencée de manière à distribuer le fluide aqueux de manière homogène dans le réacteur, une répartition homogène du charbon actif frais est avantageusement obtenue.

Le fluide aqueux pénétrant dans le réacteur comprend une concentration en charbon actif frais apte à renouveler en continu le lit de charbon fluidisé. La concentration en charbon actif dans le fluide aqueux pénétrant dans le réacteur peut varier de 3 à 10 mg/l. Plus particulièrement, la concentration en charbon actif est d'au moins 5 mg/l lorsque le traitement vise à éliminer des matières organiques naturelles. Elle est d'au moins 3 mg/l lorsque le traitement vise à éliminer des micropolluants organiques. Les concentrations en charbon actif frais peuvent être augmentées dans le cadre de traitement spécifique et pourront être portées à plusieurs dizaines ou centaines de milligramme par litre suivant les charges polluantes et la nature des molécules organiques à éliminer.

L'extraction de charbon actif fluidisé est réalisée par un circuit d'extraction de charbon actif en poudre usagé (5), de préférence disposé dans la partie inférieure de la zone réactionnelle du réacteur. L'extraction du charbon actif peut être réalisée par pompage ou par soutirage gravitaire par le biais d'une canalisation d'extraction (5) débouchant au sein du lit de charbon. L'extraction du charbon actif peut également être réalisée par le biais d'un concentrateur recueillant les flocs de charbon actif en poudre à partir d'une surverse (10) en partie supérieure de la zone réactionnelle (A). Les deux systèmes d'extraction de charbon actif en poudre peuvent être combinés.

La zone réactionnelle est surmontée d'une zone de séparation (B) où est réalisée la séparation du fluide aqueux dépollué des particules de charbon actif en poudre. La hauteur de la zone de séparation est généralement d'au moins 1,5 m.

Dans la zone de séparation, la turbidité résiduelle du fluide aqueux dépollué est maintenue à des concentrations inférieures à 2 NFU, de préférence inférieures à 1 NFU, en partie haute du réacteur.

Les fluides aqueux dépollués et décantés peuvent être récupérés par surverse en partie haute du réacteur (figure 1) au sein d'un dispositif de récupération (6). De manière alternative, des goulottes de reprise (11) peuvent être disposées en partie haute du réacteur pour récupérer les fluides traités et décantés (figure 2).

Comme représenté à la figure 2, le réacteur de traitement peut être équipé d'un circuit d'air de détassage (12) connecté à la rampe de distribution (4). Il a pour fonction de détasser le lit de charbon actif en poudre lorsque le réacteur reste à l'arrêt pendant de longues durées sans recirculation d'eau traitée. Un tel système n'est cependant pas indispensable.

Le réacteur de traitement peut être équipé d'un dispositif de collecte de boues (10) aménagé dans la partie haute du réacteur afin d'assurer un soutirage des boues de charbon actif en poudre en cas de nécessité, par exemple si la hauteur du lit augmente au-delà d'une valeur limite fixée par l'utilisateur ou pour d'autres besoins du domaine de l'exploitation du procédé.

Les dimensions du réacteur de traitement peuvent varier, tout particulièrement en fonction du niveau de dépollution recherché. Typiquement, les dimensions du réacteur sont choisies pour permettre d'assurer une vitesse ascensionnelle du fluide variant de 2 à 12 m³/m²/h, de préférence de 6 à 10 m³/m²/h. Généralement, le réacteur de traitement présente une hauteur utile (hauteur (A)+(B)) comprise entre 3,9 m et 4,5 m. Le réacteur de traitement peut se présenter sous forme de cylindre ou présenter une section transversale polygonale, de préférence carrée.

L'installation de traitement de la présente invention peut comprendre un ou plusieurs réacteurs de traitement. Par exemple, une installation de traitement peut comprendre deux réacteurs au sein desquels sont réalisées les étapes de traitement et de séparation. Le premier réacteur peut représenter un réacteur de dégrossissage où la majeure partie de la pollution organique est éliminée. Le second réacteur peut constituer un réacteur complémentaire d'affinage permettant d'éliminer les polluants restants.

La mise en oeuvre du procédé de la présente invention permet d'obtenir une qualité d'eau traitée équivalente voire supérieure à celle obtenue par d'autres procédés, tout particulièrement concernant la turbidité et les taux de matière en suspension.

Le procédé, le réacteur et l'installation de traitement de la présente invention permettent de traiter une variété de fluides aqueux, tels que des eaux résiduaires urbaines ou tertiaires, des eaux de surface, des eaux souterraines.

L'installation de traitement de la présente invention peut être insérée dans les filières traditionnelles de traitement des eaux. Pour les eaux de surface, l'installation est généralement disposée en aval d'une installation de clarification. Pour les eaux souterraines, elle pourra être disposée en traitement direct d'eaux brutes.

Le traitement par contact sur lit fluidisé dans le réacteur peut être suivi d'une filtration des eaux traitées. La filtration peut être réalisée sur média granulaire, par exemple une filtration sur sable, ou sur système membranaire, par exemple sur une membrane d'ultrafiltration.

### EXEMPLES

Un exemple particulier de dimensionnement hydraulique de l'installation de traitement selon l'invention destiné à traiter des eaux industrielles préalablement clarifiées est présenté. Les conditions particulières mentionnées ci-après ont conduit à des résultats parfaitement satisfaisants dans la pratique.
Débit nominal : 24 m³/h
Nombre de réacteur : 1
Vitesse ascensionnelle : 8 m³/m².h
Section : carrée
Charbon actif en poudre (CAP) : Charbon à base de houille 15 -35 µm
Dosage en charbon actif en poudre : 5 à 20 mg/L

### Caractéristiques du réacteur :

Hauteur : 4.9 m
Longueur : 5 m
Largeur : 5 m
Section : Carrée
Hauteur du lit fluidisé de charbon actif en poudre au débit nominal: entre 2 et 3 m
Mode d'extraction du charbon actif usagé : gravitaire
Niveau d'extraction du charbon actif usagé : 50 cm de la base du réacteur

**Réactifs :**

| | |
|---|---|
| Dosage en CAP | voisin de 9,4 g/m³ |
| Dosage en coagulant | voisin de 0,08 g Fe / m³ |
| Rapport massique coagulant/CAP | 8 mg Fe/g CAP |
| Dosage en polymère | voisin de 0,07 g/m³ |

**Constitution du lit de CAP et temps de contact hydraulique:**

| | |
|---|---|
| Concentration moyenne en CAP (MS) | voisin de 5 g/L |
| Teneur en CAP (MS) | voisin de 80 % |
| Temps de contact | voisin de 15 min |

| | |
|---|---|
| La concentration moyenne en CAP et teneur en CAP (Matière en Suspension (MS)) sont déterminées par pesée après centrifugation de la suspension et séchage à 105°C | |

Purge en boues de CAP usagé :

| | |
|---|---|
| Volume extrait /production | voisin de 0,2 % |

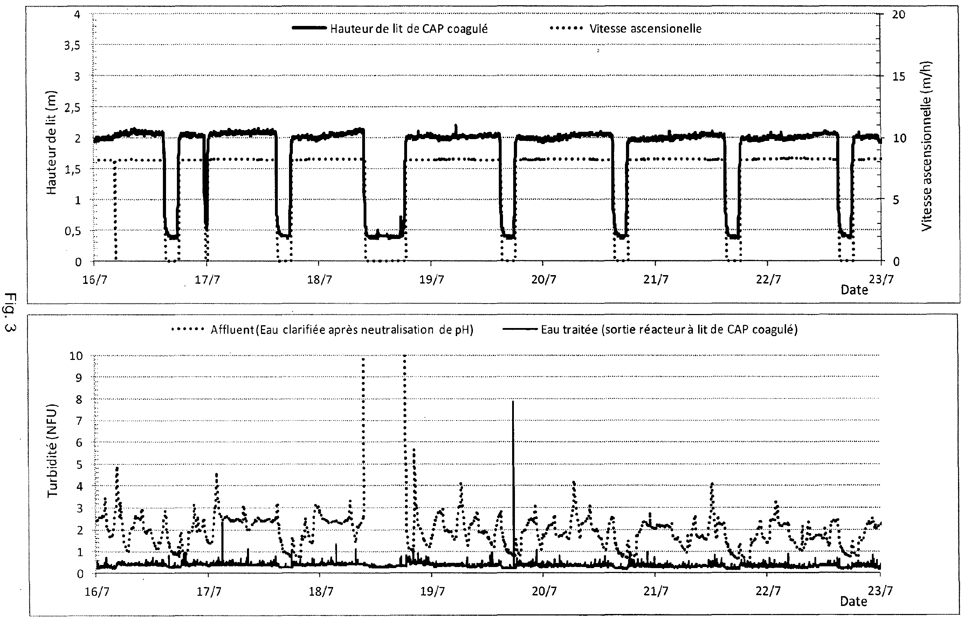

Les résultats d'exploitation de l'installation de la présente invention sur le traitement d'une eau clarifiée présentant une turbidité initiale comprise entre 1 et 3 NFU (Nephelometric Formazine Unit) à 20-21°C sont présentés sur la figure 3.

La turbidité résiduelle obtenue après traitement est inférieure à 1NFU.

## Revendications

1. Procédé de traitement en flux ascendant d'un fluide aqueux par adsorption sur charbon actif en poudre au sein d'un lit fluidisé de charbon actif, ledit procédé comprenant les étapes de :
a) mise en contact du fluide aqueux à traiter avec un agent de coagulation, un agent de floculation et du charbon actif frais en poudre, ledit fluide aqueux à traiter étant choisi parmi les eaux résiduaires urbaines ou tertiaires, les eaux de surface, et les eaux souterraines ;
b) injection du fluide aqueux obtenu à l'issue de l'étape a) comprenant un agent de coagulation, un agent de floculation et du charbon actif frais en poudre, en partie inférieure d'un lit fluidisé de charbon actif en poudre dont la concentration moyenne en charbon actif varie de 2 à 10g/l, de manière à mettre en contact le fluide aqueux obtenu à l'étape (a) avec les particules de charbon actif en poudre ;
c) séparation gravitaire du fluide aqueux dépollué des particules de charbon actif en poudre en partie supérieure du lit fluidisé pour obtenir un fluide aqueux dépollué et décanté ayant une turbidité résiduelle maintenue à des concentrations inférieures à 2 NFU ;
d) collecte du fluide aqueux dépollué et décanté ;
e) extraction de charbon actif usagé,
lesdites étapes b), c) et d) étant réalisées au sein d'un réacteur de traitement à lit fluidisé de charbon actif en poudre fonctionnant en flux ascendant, ledit réacteur étant dépourvu d'une zone aménagée comprenant un garnissage constitué d'un lit de gravier surmonté par un lit de sable à la base du réacteur.

2. Procédé de traitement selon la revendication 1 dans lequel l'agent de coagulation est choisi parmi les agents de coagulation à base de fer, d'aluminium ou leurs mélanges.

3. Procédé de traitement selon la revendication 1 ou 2 dans lequel l'agent de coagulation est un agent à base de fer, ledit agent étant présent en une quantité telle que la masse de fer représente de 0.5% à 1.5% de la masse de charbon actif frais en poudre dans le fluide aqueux à traiter.

4. Procédé de traitement selon la revendication 1 ou 2 dans lequel l'agent de coagulation est un agent à base d'aluminium, ledit agent étant présent en une quantité telle que la masse d'aluminium représente de 0.15% à 0.45% de la masse de charbon actif frais en poudre dans le fluide aqueux à traiter.

5. Procédé de traitement selon l'une des revendications précédentes dans lequel la concentration en agent de floculation varie de 0.04 à 0.08 g/m³.

6. Procédé de traitement selon l'une des revendications précédentes dans lequel le charbon actif usagé est extrait en une quantité égale à la quantité de charbon actif frais en poudre injectée en partie inférieure du lit fluidisé de charbon actif en poudre.

7. Réacteur de traitement (1) à lit fluidisé de charbon actif en poudre fonctionnant en flux ascendant comprenant :
- une zone réactionnelle (A) constituée d'un lit fluidisé de charbon actif en poudre (2) s'étendant depuis la base (3) du réacteur, ladite zone réactionnelle comprenant :
- une rampe de distribution (4) située à la base du réacteur permettant d'injecter dans le réacteur un fluide aqueux comprenant le fluide aqueux à traiter, du charbon actif frais en poudre, un agent de coagulation et un agent de floculation ;
- un circuit d'extraction du charbon actif en poudre usagé (5) ;
- une zone de séparation (B) surmontant la zone réactionnelle (A) permettant la séparation gravitaire du fluide aqueux dépollué du charbon actif en poudre,
ledit réacteur étant dépourvu d'une zone aménagée comprenant un garnissage constitué d'un lit de gravier surmonté par un lit de sable à la base du réacteur.

8. Réacteur de traitement selon la revendication 7 comprenant en outre un dispositif de récupération (6) du fluide aqueux dépollué et décanté.

9. Réacteur de traitement selon la revendication 7 ou 8 dans lequel la zone de séparation (B) présente une hauteur d'au moins 1.5 m.

10. Réacteur de traitement selon l'une des revendications 7 à 9 dans lequel la vitesse ascensionnelle varie de 2 à 12 m³/m²/h.

11. Installation de traitement (1') d'un fluide aqueux par adsorption sur charbon actif en poudre comprenant :
- une canalisation de transport du fluide aqueux à traiter (7);
- un dispositif d'injection (8) d'un mélange comprenant un agent de coagulation et du charbon actif frais en poudre dans la canalisation de transport du fluide aqueux à traiter;
- un dispositif d'injection (9) d'un agent de floculation dans le fluide aqueux à traiter ;
- un réacteur de traitement à lit fluidisé de charbon actif en poudre fonctionnant en flux ascendant (1), le réacteur comprenant :
- une zone réactionnelle (A) constituée d'un lit fluidisé de charbon actif en poudre (2) s'étendant depuis la base (3) du réacteur, ladite zone réactionnelle comprenant :
- une rampe de distribution (4) du fluide aqueux à traiter située à la base (3) du réacteur et connectée à la canalisation de transport (7) du fluide à traiter ;
- un circuit d'extraction (5) du charbon actif usagé;
- une zone de séparation (B) surmontant la zone réactionnelle (A) permettant la séparation gravitaire du fluide aqueux dépollué du charbon actif en poudre,
ledit réacteur étant dépourvu d'une zone aménagée comprenant un garnissage constitué d'un lit de gravier surmonté par un lit de sable à la base du réacteur.

12. Installation de traitement selon la revendication 11 dans laquelle le dispositif d'injection (9) de l'agent de floculation est disposé en aval du dispositif d'injection (8) dudit mélange.

13. Installation de traitement selon la revendication 11 dans laquelle le dispositif d'injection (9) de l'agent de floculation permet l'injection de l'agent de floculation dans ledit mélange comprenant un agent de coagulation et du charbon actif frais en poudre.

14. Installation de traitement selon l'une des revendications 11 à 13 dans laquelle le réacteur comprend en partie haute des goulottes de reprise pour récupérer le fluide aqueux dépollué et décanté.

15. Installation de traitement selon l'une des revendications 11 à 14 dans laquelle le réacteur de traitement est équipé d'un circuit d'air de détassage (12) connecté à la rampe de distribution (4).

## Patentansprüche

1. Verarbeitungsverfahren im aufsteigenden Fluss einer wässrigen Flüssigkeit per Adsorption auf Aktivkohle in Pulverform in einem Wirbelschichtbett aus Aktivkohle, wobei das genannte Verfahren die Schritte umfasst:
a) Kontaktieren der zu bearbeitenden wässrigen Flüssigkeit mit einem Koagulationsmittel, einem Flockungsmittel und frischer Aktivkohle in Pulverform, wobei die genannte zu bearbeitende wässrige Flüssigkeit aus urbanem oder Abwasser aus Nebenkanälen, Oberflächenwasser und unterirdischem Wasser ausgewählt ist,
b) Einschießen der wässrigen Flüssigkeit, die nach Abschluss des Schritts a) erhalten wird, umfassend ein Gerinnungsmittel, ein Flockungsmittel und frische Aktivkohle in Pulverform, zum Teil unterhalb eines Wirbelschichtbetts aus Aktivkohle in Pulverform, deren durchschnittliche Konzentration aus Aktivkohle von 2 bis 10 g/l derart schwankt, dass die in Schritt a) erhaltene wässrige Flüssigkeit mit den Partikeln der Aktivkohle in Pulverform in Kontakt gebracht wird;
c) Schwerkrafttrennung der von den Partikeln aus Aktivkohle in Pulverform gereinigten wässrigen Flüssigkeit im oberen Teil des Wirbelschichtbetts, um eine gereinigte und geklärte wässrige Flüssigkeit mit einem Rest-Trübungsgrad zu erhalten, der in Konzentrationen von unterhalb von 2 NFU gehalten wird;
d) Auffangen der gereinigten und geklärten wässrigen Flüssigkeit;
e) Extrahieren der verbrauchten Aktivkohle;
wobei die genannten Schritte b), c) und d) innerhalb eines Verarbeitungsreaktors mit Wirbelschichtbett mit Aktivkohle in Pulverform durchgeführt werden, die im aufsteigenden Fluss funktionieren, wobei der genannte Reaktor keinen eingerichteten Bereich aufweist, der eine Auskleidung umfasst, die aus einem Kiesbett gebildet ist, die von einem Sandbett an der Basis des Reaktors überragt wird.

2. Verarbeitungsverfahren gemäß Anspruch 1, bei dem das Gerinnungsmittel aus den Gerinnungsmitteln auf Eisenbasis, Aluminiumbasis oder deren Mischungen ausgewählt wird.

3. Verarbeitungsverfahren gemäß Anspruch 1 oder 2, bei dem das Gerinnungsmittel ein Mittel auf Eisenbasis ist, wobei das genannte Mittel in einer derartigen Menge vorhanden ist, dass die Eisenmasse 0,5 % bis 1,5 % der Masse aus frischer Aktivkohle in Pulverform in der zu bearbeitenden wässrigen Flüssigkeit darstellt.

4. Verarbeitungsverfahren gemäß Anspruch 1 oder 2, bei dem das Gerinnungsmittel ein Mittel auf Aluminiumbasis ist, wobei das genannte Mittel in einer derartigen Menge vorhanden ist, dass die Aluminiummasse 0,15 % bis 0,45 % der Masse aus frischer Aktivkohle in Pulverform in der zu bearbeitenden wässrigen Flüssigkeit darstellt.

5. Verarbeitungsverfahren gemäß einem der voranstehenden Ansprüche, bei der die Konzentration an Flockungsmittel zwischen 0,04 % und 0,08 % g/m³ schwankt.

6. Verarbeitungsverfahren gemäß einem der voranstehenden Ansprüche, bei dem die verbrauchte Aktivkohle in einer Menge gleich der frischen Aktivkohle in Pulverform extrahiert wird, die im unteren Teil des Wirbelschichtbetts aus Aktivkohle in Pulverform eingeschossen wird.

7. Verarbeitungsreaktor (1) mit Wirbelschichtbett aus Aktivkohle in Pulverform, das in aufsteigendem Fluss funktioniert, umfassend:
- einen Reaktionsbereich (A), der aus einem Wirbelschichtbett aus Aktivkohle in Pulverform (2) gebildet wird, das sich von der Basis (3) des Reaktors erstreckt, wobei der genannte Reaktionsbereich umfasst:
- eine Verteilerrampe (4), an der Basis des Reaktors angeordnet ist und das Einschießen einer wässrigen Flüssigkeit in den Reaktor zulässt, umfassend die zu bearbeitende wässrige Flüssigkeit, frische Aktivkohle in Pulverform, ein Gerinnungsmittel und ein Flockungsmittel;
- einen Extraktionskreislauf der verbrauchten Aktivkohle in Pulverform (5);
- einen Trennungsbereich (B), der den Reaktionsbereich (A) überragt, der die Schwerkrafttrennung der gereinigten wässrigen Flüssigkeit von der Aktivkohle in Pulverform zulässt;
wobei der genannte Reaktor keinen Bereich aufweist, der eine Auskleidung umfasst, die aus einem Kiesbett gebildet wird, das von einem Sandbett an der Basis des Reaktors überragt wird.

8. Verarbeitungsreaktor gemäß Anspruch 7, umfassend darüber hinaus eine Wiedergewinnungsvorrichtung (6) der gereinigten und geklärten wässrigen Flüssigkeit.

9. Verarbeitungsreaktor gemäß Anspruch 7 oder 8, bei dem der Trennungsbereich (B) eine Höhe von wenigstens 1,5 m aufweist.

10. Verarbeitungsreaktor gemäß einem der Ansprüche 7 bis 9, bei dem die Aufstiegsgeschwindigkeit zwischen 2 und 12 m³/m²/h schwankt.

11. Verarbeitungsanlage (1') einer wässrigen Flüssigkeit per Adsorption auf Aktivkohle in Pulverform, umfassend:
- eine Transportkanalisation der zu bearbeitenden wässrigen Flüssigkeit (7);
- eine Einschießvorrichtung (8) einer Mischung, umfassend ein Gerinnungsmittel und frische Aktivkohle in Pulverform in die Transportkanalisation der zu bearbeitenden wässrigen Flüssigkeit;
- eine Einschießvorrichtung (9) eines Flockungsmittels in die zu bearbeitende wässrige Flüssigkeit;
- einen Verarbeitungsreaktor mit Wirbelschichtbett aus Aktivkohle in Pulverform, das in aufsteigendem Fluss (1) funktioniert, wobei der Reaktor umfasst:
- einen Reaktionsbereich (A), der aus einem Wirbelschichtbett aus Aktivkohle in Pulverform (2) gebildet wird, der sich von der Basis (3) des Reaktors erstreckt, wobei der genannte Reaktionsbereich umfasst:
- eine Verteilerrampe (4) der zu verarbeitenden wässrigen Flüssigkeit und die an der Basis (3) des Reaktors angeordnet ist und an die Transportkanalisation (7) der zu bearbeitenden Flüssigkeit angeschlossen ist;
- einen Extraktionskreislauf (5) der verbrauchten Aktivkohle;
- einen Trennungsbereich (B), der den Reaktionsbereich (A) überragt, der die Schwerkrafttrennung der gereinigten wässrigen Flüssigkeit der Aktivkohle in Pulverform zulässt,
wobei der genannte Reaktor keinen eingerichteten Bereich aufweist, der eine Auskleidung umfasst, die aus einem Kiesbett gebildet wird, das von einem Sandbett an der Basis des Reaktors überragt wird.

12. Verarbeitungsanlage gemäß Anspruch 11, bei der die Einschießvorrichtung (9) des Flockungsmittels der Einschießvorrichtung (8) der genannten Mischung nachgeschaltet angeordnet ist.

13. Verarbeitungsanlage gemäß Anspruch 11, bei der die Einschießvorrichtung (9) des Flockungsmittels das Einschießen des Flockungsmittels in die genannte Mischung zulässt, die ein Gerinnungsmittel und frische Aktivkohle in Pulverform umfasst.

14. Verarbeitungsanlage gemäß einem der Ansprüche 11 bis 13, bei der der Reaktor im hohen Teil Rücknahmerinnen zum Wiedergewinnen der gereinigten und geklärten wässrigen Flüssigkeit umfasst.

15. Verarbeitungsanlage gemäß einem der Ansprüche 11 bis 14, bei der der Verarbeitungsreaktor mit einem Luft-Ausdünnungskreislauf (12) ausgerüstet ist, der an die Verteilerrampe (4) angeschlossen ist.

## Claims

1. Method for treating with upward flow an aqueous fluid by adsorption on powdered activated carbon within an activated carbon fluidised bed, said method comprising the steps of:
a) bringing the aqueous fluid to treat into contact with a coagulant, a flocculant and fresh powdered activated carbon, said aqueous fluid to treat being selected from among urban or tertiary wastewater, surface water and ground water;
b) injecting the aqueous fluid obtained at the end of step a) comprising a coagulant, a flocculant and fresh powdered activated carbon into the lower part of a powdered activated carbon fluidised bed of which the average concentration of activated carbon varies from 2 to 10 g/l, in such a way as to bring the aqueous fluid obtained at step (a) into contact with the particles of powdered activated carbon;
c) gravitational separation of the aqueous fluid depolluted from the particles of powdered activated carbon in the upper part of the fluidised bed to obtain a depolluted and decanted aqueous fluid having a residual turbidity maintained at concentrations below 2 NFU;
d) collecting the depolluted and decanted aqueous fluid;
e) extracting the used activated carbon,
said steps b), c) and d) being carried out within a treatment reactor with powdered activated carbon fluidised bed operating with upward flow, said reactor being devoid of a built-up zone comprising a packing constituted of a bed of gravel surmounted by a bed of sand at the base of the reactor.

2. Treatment method according to claim 1 wherein the coagulant is selected from among coagulants based on iron, aluminium or mixtures thereof.

3. Treatment method according to claim 1 or 2 wherein the coagulant is a coagulant based on iron, said coagulant being present in a quantity such that the weight of iron represents from 0.5% to 1.5% of the weight of fresh powdered activated carbon in the aqueous fluid to treat.

4. Treatment method according to claim 1 or 2 wherein the coagulant is a coagulant based on aluminium, said coagulant being present in a quantity such that the weight of aluminium represents from 0.15% to 0.45% of the weight of fresh powdered activated carbon in the aqueous fluid to treat.

5. Treatment method according to one of the preceding claims wherein the concentration of flocculant varies from 0.04 to 0.08 g/m³.

6. Treatment method according to one of the preceding claims wherein the used activated carbon is extracted in a quantity equal to the quantity of fresh powdered activated carbon injected into the upper part of the powdered activated carbon fluidised bed.

7. Treatment reactor (1) with powdered activated carbon fluidised bed operating with upward flow comprising:
- a reaction zone (A) constituted of a powdered activated carbon fluidised bed (2) extending from the base (3) of the reactor, said reaction zone comprising:
- a distribution manifold (4) situated at the base of the reactor making it possible to inject into the reactor an aqueous fluid comprising the aqueous fluid to treat, fresh powdered activated carbon, a coagulant and a flocculant;
- a circuit for extracting the used powdered activated carbon (5);
- a separation zone (B) surmounting the reaction zone (A) enabling the gravitational separation of the aqueous fluid depolluted of powdered activated carbon,
said reactor being devoid of a built-up zone comprising a packing constituted of a bed of gravel surmounted by a bed of sand at the base of the reactor.

8. Treatment reactor according to claim 7 further comprising a device for recovering (6) the depolluted and decanted aqueous fluid.

9. Treatment reactor according to claim 7 or 8 wherein the separation zone (B) has a height of at least 1.5 m.

10. Treatment reactor according to one of claims 7 to 9 wherein the upwards velocity varies from 2 to 12 m³/m²/h.

11. Facility for treating (1') an aqueous fluid by adsorption on powdered activated carbon comprising:
- a pipe for transporting the aqueous fluid to treat (7);
- a device for injecting (8) a mixture comprising a coagulant and fresh powdered activated carbon into the pipe for transporting the aqueous fluid to treat;
- a device for injecting (9) a flocculant into the aqueous fluid to treat;
- a treatment reactor with powdered activated carbon fluidised bed operating with upward flow (1), the reactor comprising:
- a reaction zone (A) constituted of a powdered activated carbon fluidised bed (2) extending from the base (3) of the reactor, said reaction zone comprising:
- a distribution manifold (4) for the aqueous fluid to treat situated at the base (3) of the reactor and connected to the pipe for transporting (7) the fluid to treat;
- a circuit for extracting (5) the used activated carbon;
- a separation zone (B) surmounting the reaction zone (A) enabling the gravitational separation of the aqueous fluid depolluted from powdered activated carbon,
said reactor being devoid of a built-up zone comprising a packing constituted of a bed of gravel surmounted by a bed of sand at the base of the reactor.

12. Treatment facility according to claim 11 wherein the device for injecting (9) flocculant is arranged downstream of the device for injecting (8) said mixture.

13. Treatment facility according to claim 11 wherein the device for injecting (9) flocculant enables the injection of flocculant into said mixture comprising a coagulant and fresh powdered activated carbon.

14. Treatment facility according to one of claims 11 to 13 wherein the reactor comprises in the upper part draw-off channels for recovering the depolluted and decanted aqueous fluid.

15. Treatment facility according to one of claims 11 to 14 wherein the treatment reactor is equipped with a decompacting air circuit (12) connected to the distribution manifold (4).
